# EUROPÄISCHE PATENTSCHRIFT

(11) **EP 1 710 477 B1**
(45) Veröffentlichungstag und Bekanntmachung des Hinweises auf die Patenterteilung: **25.02.2009**
(21) Anmeldenummer: 05102756.3
(22) Anmeldetag: 07.04.2005
(51) Int. Cl.: F16H 61/30, F16H 63/30, F16H 61/12

(54) **Schaltventilvorrichtung für ein Schaltsystem eines Schaltgetriebes**
Shift valve for a gear shift system of a transmission
Soupape de contrôle pour un système de changement de vitesse d'une transmission

(43) Veröffentlichungstag der Anmeldung: 11.10.2006
(73) Patentinhaber: Getrag Ford Transmissions GmbH, 50725 Köln (DE)
(72) Erfinder: Moehlmann, Reinhard, 50739, Köln (DE); Leibbrandt, Martin, 50181, Bedburg (DE)

(56) Entgegenhaltungen:
- EP-A- 0 294 033
- DE-A1- 10 134 115
- US-A- 3 747 439
- US-A- 4 108 022
- US-A- 4 186 627
- US-A- 4 198 022
- US-A- 4 349 088
- US-A- 4 445 393
- US-A- 4 462 280

## Beschreibung

Die Erfindung betrifft ein Schaltgetriebe, insbesondere ein Doppelkupplungsgetriebe für ein Kraftfahrzeug, das einen ersten Aktuator und wenigstens einen zweiten Aktuator zum Ein- oder Auslegen von Gängen sowie eine Schaltventilvorrichtung umfasst.

Aus der DE 101 34 115, die alle Merkmale des Oberbegriffs des Anspruchs 1 offenbart, ist eine hydraulische Steuerungsvorrichtung zur Steuerung eines Doppelkupplungsgetriebes mit mehreren Gängen bekannt, das mehrere Aktuatoren zum Einlegen und Auslegen der Gänge aufweist. Das hydraulische Steuerungsvorrichtung lässt sich dort in einen ersten und in einen zweiten Teilkreis aufteilen

Zwischen dem ersten Teilkreis und einer Druckleitung ist ein erstes Schaltventil vorgesehen, das in einer ersten Stellung den ersten Teilkreis von der Druckleitung trennt und in einer zweiten Stellung mit der Druckleitung verbindet. Durch Beaufschlagung des ersten Schaltventils mit einer ersten Schaltkrat mittels einer Ventilansteuerung wird das erste Schaltventils gegen die Kraft einer Feder von der ersten Stellung in die zweite Stellung gebracht. Somit lässt sich ein erster Aktuator innerhalb des ersten Teilkreises über das erste Schaltventil mit der Druckleitung verbinden. Wird die Schaltkraft reduziert oder auf null gesetzt, drückt die Feder das Schaltventil wieder in dessen erste Stellung.

Des weiteren ist zwischen dem zweiten Teilkreis und der Druckleitung ein zweites Schaltventil vorgesehen, das, ähnlich wie das erste Schaltventil, in einer ersten Stellung den zweiten Teilkreis drucklos stellt und in einer zweiten Stellung den zweiten Teilkreis mit der Druckleitung verbindet. Auch hier stellt eine Ventilansteiterung eine Schaltkraft, eine zweite Schaltkraft, zur Verfügung, um das Schaltventil gegen die Kraft einer Feder in die zweite Stellung zu bringen. Ein zweiter Aktuator des Doppelkupplungsgetriebes, der hier dem zweiten Teilgetriebe zugeordnet sein soll, kann somit mit der Druckleitung verbunden werden.

Durch das erste und das zweite Schaltventil können folglich die beiden Teilkreise druckfrei gestellt beziehungsweise unter Druck gesetzt werden. Die beiden Schaltventile werden von voneinander unabhängigen Ventilansteuerungen geschaltet. Diese unabhängige Ansteuerung kann dazu führen, dass bei Ausfall einer Ventilansteuerung eines Schaltventils beide Aktuatoren gleichzeitig unter Druck gesetzt werden. Diese wäre beispielsweise bei den Schaltventilen der DE 101 34 115, die als elektrisch angesteuerte Magnetschaltventile ausgebildet sind, dann der Fall, wenn fehlerbedingt eines der beiden Schaltventile dauerhaft angeregt wird und das andere Schaltventil wie vorgesehen schaltet. Eine fehlerbedingte gleichzeitige Druckbeaufschlagung von Aktuatoren eines Schaltungssystem kann, unabhängig von der konkreten Aufteilung der hydraulischen Steuerungsvorrichtung gemäß der DE 101 34 115, bei Doppelkupplungsgetrieben jedoch zu schwerwiegenden Schäden führen. Wenn beispielsweise der erste Aktuator und der zweite Aktuator einem Teilgetriebe eines Doppelkupplungsgetriebes zugeordnet sind, und wenn diese beiden Aktuatoren gleichzeitig mit Druck beaufschlagt werden, würden in diesem Teilgetriebe möglicherweise zwei Gänge gleichzeitig eingelegt.

Zwar ließe sich vor den Aktuatoren anstatt der zwei Schaltventile ein Umschaltventil schalten, das in einer ersten Stellung den ersten Aktuator mit der Druckleitung und in zweiten Stellung den zweiten Aktuator mit der Druckleitung verbindet. Damit wird ausgeschlossen, dass beide Aktuatoren gleichzeitig mit Druckbeaufschlagt werden. Andererseits würde bei Verwendung dieses Umschaltventils immer ein Aktuator unter Druck stehen, was mit gewissen Leckagenverlusten verbunden wäre. Zwar könnte dem Umschaltventil wiederum ein Schaltventil vorgeschaltet sein, das, wie oben bereits beschrieben, die nachgeschalteten Aktuatoren bei Bedarf von der Druckleitung trennt. Fällt jedoch dieses Schaltventil aus, beispielsweise wenn es sich nicht mehr in die Stellung bringen lässt, in der es die Druckleitung mit den Aktuatoren verbindet, können mit den nachgeschalteten Aktuatoren keine Gänge mehr durchgeführt werden. Dies würde möglicherweise bei einem Doppelkupplungsgetriebe in einem Kraftfahrzeug bedeuten, dass Anfahrgänge nicht mehr eingelegt werden können.

In der EP 0 294 033 B1 wird ein Schaltsystem mit einer Schaltventilvorrichtung in Form eines so genannten Kupplungsvorrangventils offenbart, das ein erstes Schaltventil und ein zweites Schaltventil umfasst. Bei einer fehlerbedingten gleichseitigen Ansteuerung der Schaltventile sorgt das Kupplungsvorrangventil dafür, dass es nicht zu einer Verspannung im Getriebe kommt, indem eine Gangstufe des Getriebes priorisiert wird. Im Falle einer gleichzeitigen Ansteuerung wirken die Schaltkräfte der beiden Schaltventile in gleiche Richtung gegen eine resultierende Kraft, die sich aus der Kraft einer Schraubenfeder und einem zusätzlichen hydraulischen Gegendruck zusammensetzt.

Der Erfindung liegt daher die Aufgabe zugrunde, ein Schaltgetriebe mit einer ein erstes und ein zweites Schaltventil umfassenden Schaltventilvorrichtung bereitzusteifen, das bei Auftreten eines Einzelfehlers zumindest eine sicheren Notbetrieb des Schaltgetriebes ermöglicht.

Die Aufgabe wird dadurch gelost, dass zwischen dem ersten und dem zweiten Schaltventil eine Koppelung vorgesehen ist, die die erste Schaltkraft auf das zweite Schaltventil wenigstens zum Teil überträgt, wobei die aus der ersten und der zweiten Schaltkraft resultierende, auf das zweite Schaltventil wirkende Kraft nicht ausreicht, das zweite Schaltventil in dessen zweiten Stellung zu halten oder in dessen zweite Stellung zu drücken, wenn es sich in der ersten Stellung befindet, und wobei bei einem fehlerbedingten gleichzeitigen Anliegen der ersten und zweiten Schaltkraft das erste Schaltventil sich in dessen zweiten Stellung befindet.

Wenn bei dem erfindungsgemäßen Schaltgetriebe das erste Schaltventil mit der ersten Schaltkraft beaufschlage wird, schaltet das erste Schaltventil in dessen zweite Stellung und stellt den ersten Aktuator unter Druck. Gleichzeitig wirkt durch die Koppelung zwischen dem ersten und zweiten Schaltventil diese erste Schaltkraft, auch auf das zweite Schaltventil. Da die aus erster und zweiter Schaltkraft resultierende Kraft nicht mehr ausreicht, das zweite Schaltventil aus dessen erste Stellung heraus zu schalten, stellt das erste Schaltventil eine wirksame Sperre für das zweite Schaltventil da. Die Sperre verhindert, dass der erste und zweite Aktuator gleichzeitig unter Druck gesetzt werden, auch wenn beide Schaltventile - durch einen Steuerungsfehler - gleichzeitig mit der jeweilige Schaltkraft beaufschlagt werden.

Das zweite Schaltventil wird zudem aus der zweiten Stellung gedrückt, sobald das erste Schaltventil mit der ersten Schaltkraft angesteuert wird. Somit wirkt das erste Schaltventil nicht nur als Sperre, sondern drängt das zweite Schaltventil aus dessen zweiten Stellung heraus, auch wenn die zweite Schaltkraft anliegt. Daraus ergibt sich ein klare Priorisierung: Wenn beide Schaltventil fehlerbedingt gleichzeitig angesteuert werden beziehungsweise die jeweiligen Schaltkräfte anliegen, befindet sich das erste Schaltventil, in dessen zweiten Stellung lässt eine Verbindung zwischen dem ersten Aktuator und der Druckleitung zu. Bei einem Doppelkupplungsgetriebe für ein Kraftfahrzeug kann dieser erste Aktuator vorzugsweise zum Einlegen wenigstens eines Anfahrganges dienen. Tritt der Fehler eines gleichzeitigen Anliegens von erster und zweiter Schaltkraft auf, kann das Kraftfahrzeug noch bewegt werden.

Vorzugsweise sind die jeweiligen zweiten Stellungen des ersten und zweiten Schaltventils federbelastet. Zum Schalten von der ersten in die zweite Stellung muss eine Kraft einer Feder überwunden werden. Die Feder drückt zudem das betreffende Schaltventil wieder in die erste Stellung des Schaltventils zurück, wenn nicht die entsprechende Schaltkraft des Schaltventils dies verhindert. Bei der erfindungsgemäßen Steuerungsvorrichtung wirkt somit auf das zweite Schaltventil eine Feder sowie die erste und zweite Schaltkraft.

Um das zweite Schaltventil aus dessen zweiten Stellung zu drücken, muss die Summe aus erster Schaltkraft und Federkraft größer sein als die zweite Schaltkraft, wobei die erste Schaltkraft und die Federkraft in gleicher Richtung wirken und der zweiten Schaltkraft entgegen gesetzt sind.

In einem bevorzugten Ausführungsbeispiel ist die auf das zweite Schaltventil wirkende erste Schaltkraft größer als die zweite Schaltkraft. Unabhängig von einer Feder wird dabei das zweite Schaltventil immer in dessen erste Stellung gedrückt oder in dieser Stellung gehalten, sobald die erste Schaltkraft anliegt und von der Koppelung übertragen wird. Vorzugsweise ist die erste Schaltkraft in etwa doppelt so groß wie die zweite Schaltkraft, so dass das zweite Schaltventil sicher in dessen erste Stellung gedrückt wird, auch wenn die zweite Schaltkraft geschaltet ist.

Der Koppelung zwischen dem ersten und zweiten Schaltventil kann mechanisch sein, aber auch beispielsweise hydraulisch sein.

Die Koppelung umfasst vorzugsweise eine Feder, wobei die Feder in einer Ruhestellung die Schaltventile in deren jeweiligen ersten Stellungen drückt. Die Feder soll sich in ihrer Ruhestellung befinden, wenn sowohl die erste als auch die zweite Schaltkraft nicht anliegen. Die Feder kann zwischen dem ersten und dem zweiten Schaltventil angeordnet sein, wobei sie zusammengedrückt wird, wenn die eine und/oder die andere Schaltkraft auf die Schaltventile wirken. Die Feder überträgt dabei die erste Schaltkraft des ersten Schaltventils auf das zweite Schaltventil. Entsprechend wird auch die zweite Schaltkraft auf das erste Schaltventil übertragen.

In einem bevorzugten Ausführungsbeispiel schließt die Koppelung zwischen dem ersten und dem zweiten Schaltventil eine gleichzeitige jeweils zweite Stellung der beiden Schaltventile durch Formschluss aus. Dies kann beispielsweise in dem Ausführungsbeispiel, in dem eine Feder als Koppelung zwischen den Schaltventilen angeordnet ist, dadurch erfolgen, dass die Feder auf Blocklänge zusammengedrückt wird, wenn sich eines der beiden Schaltventile in dessen zweiten Stellung befindet. Dies erhöht zusätzlich die Sicherheit, dass der erste und zweite Aktuator nicht gleichzeitig unter Druck gesetzt werden.

Dem ersten und/oder zweiten Schaltventil kann jeweils ein Signalelement zur Erzeugung eines Signaldrucks zum Aufbau der jeweiligen Schaltkraft zugeordnet sein, wobei das Signalelement vorzugsweise elektro-mechanisch betätigt werden kann. Durch Anlegen eines Stroms an das Signalelement stellt dieses ein Signaldruck zur Verfügung, durch den das entsprechende Schaltventil hydraulisch betätigt wird. Es ist aber auch möglich, dass das erste und das zweite Schaltventil direkt elektrisch anzusteuern.

In einem bevorzugten Ausführungsbeispiel entspricht der Signaldruck des Signalelements des ersten Schaltventils dem Signaldruck des Signalelements des zweiten Schaltventils. Dadurch können baugleiche Signalelemente an jeweils eine gleiche Druckleitung angeschlossen werden, was den Aufbau des Schaltsystems vereinfacht.

Die wirksame Fläche eines mit dem Signaldruck beaufschlagten Kolbens des ersten Schaltventils kann größer sein als eine wirksame Fläche eines mit dem Signaldruck beaufschlagten Kolbens des zweiten Schaltventils. Durch entsprechende Auslegung der Flächen lässt sich ein gewünschtes Verhältnis zwischen der ersten und zweiten Schaltkraft einstellen. Zweckmäßig ist die wirksame Fläche des Kolbens des ersten Schaltventils doppelt so groß wie die entsprechende Fläche des zweiten Schaltventils. Daraus folgt bei jeweils gleichen Signaldrücken ein Verhältnis zwischen erster Schaltkraft und zweiter Schaltkraft von 2:1.

Das erste oder das zweite Schaltventil kann als 3/2-Wege-Ventil ausgebildet sein. Das 3/2-Schaltventil weist dabei zwei Eingänge und eine Ausgang auf. Ein Eingang verbindet das Schaltventil mit der Druckleitung, während der andere Eingang das Schaltventil mit einem Ölsumpf oder dergleichen verbindet. Der Ausgang verbindet das Schaltventil direkt oder indirekt über weitere Ventile mit dem zugehörigen Aktuator.

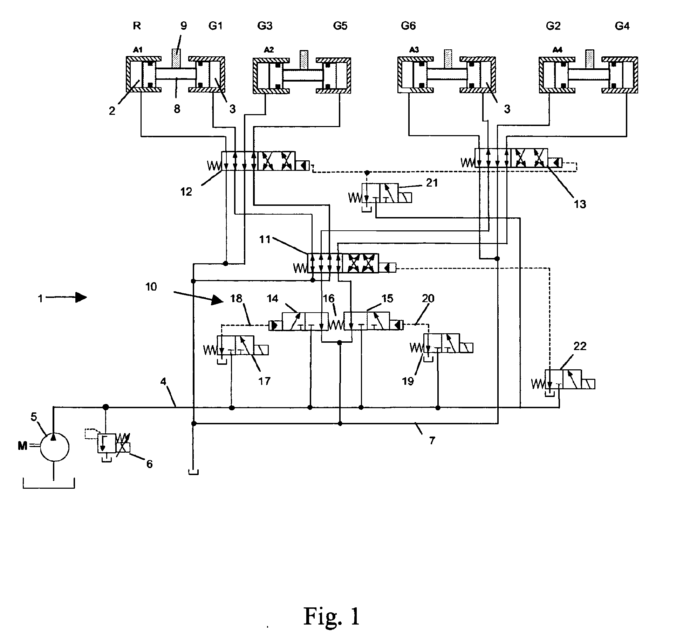

Anhand des in den Figur 1 dargestellten Ausführungsbeispiels wird die Erfindung näher erläutert.

Figur 1 zeigt ein mit 1 bezeichnetes Schaltsystem eines Schaltgetriebes mit vier Aktuatoren A1, A2, A3, A4, die jeweils als doppelseitig ansteuerbare Schaltzylinder ausgebildet sind. Ein Schaltzylinder A1, A2, A3, A4 weist jeweils eine erste Kammer 2 und eine zweite Kammer 3 auf, die über das Schaltsystem 1 mit einer Druckleitung 4 je nach Stellung der einzelnen Bauteile des Schaltsystems verbunden werden können. Eine motorgetriebene Pumpe 5 und ein Druckregler 6 sorgen für einen geregelten Druck in der Druckleitung 4. Desweiteren verbindet, bei entsprechender Stellung der einzelnen Bauteile, das Schaltsystem 1 die Kammern 2, 3 der Aktuatoren A1 bis A4 mit einer Ölsumpfleitung 7, um sie drucklos stellen zu können.

Wird beispielsweise die zweite Kammer 3 des Aktuators A1 mit dem regelbaren Druck in der Druckleitung 4 beaufschlagt und gleichzeitig die erste Kammer 2 des Aktuators drucklos gestellt, verschiebt sich ein Doppelkolben 8 in der Darstellung der Figur 1 nach links. Mit Hilfe einer an dem Doppelkolben 8 befestigten Schaltgabel 9 (in Figur 1 nur angedeutet) wird ein Rückwärtsgang R eingelegt. Wird der Doppelkolben 8 in der Darstellung der Figur 1 hingegen nach rechts bewegt, wird der erste Vorwärtsgang G1 des Schaltgetriebes eingelegt. Die in der Figur 1 dargestellte Stellung des Doppelkolbens 8 entspricht einer Neutralstellung der Schaltgabel 9.

Wie durch Aktuator A1 der Rückwärtsgang R und der erste Gang G1 eingelegt werden kann, lassen sich über die anderen Aktuatoren A2 bis A4 die anderen Gänge G2 bis G6 schalten. Die Zuordnung von Aktuator und Gang ist der Figur 1 entnehmbar.

Das Schaltsystem 1 umfasst eine Schaltventilvorrichtung 10 zur Auswahl eines Aktuators, ein Gruppenauswahlventil 11 und zwei Kammerauswahlventile 12 und 13. Mit Hilfe des Gruppenauswahlventils 11 wird entweder die Gruppe mit den Aktuatoren A1 und A2 oder die Gruppe mit den Aktuatoren A3 und A4 ausgewählt. Aufgrund der Reihenschaltung der Ventilvorrichtungen 10, 11 und 12 beziehungsweise 13 lässt sich eine bestimmte Kammer eines Aktuators auswählen, so dass in diese Kammer ein Druckmedium mit einem modellierten Druck von der Druckleitung 4 geleitet werden kann.

Die Schaltventilvorrichtung 10 umfasst ein erstes Schaltventil 14 und ein zweites Schaltventil 15. Zwischen den Ventilen 14, 15 ist eine Feder 16 angeordnet, die sich mit einem Ende an dem ersten Schaltventil 14 und an einem anderen Ende an dem zweiten Schaltventil 15 abstützt. Die Feder 16 drückt die beiden Schaltventile in eine jeweilige erste Stellung, so wie es in Figur 1 dargestellt ist. In der in Figur 1 dargestellten Stellung der Schaltventilvorrichtung 10 (beide Schaltventile 14, 15 befinden sich jeweils in deren ersten Stellung) sind die Kammern 2, 3 aller Aktuatoren sowie das Gruppenauswahlventil 11 und die Kammerauswahlventile 12, 13 drucklos geschaltet.

Dem ersten Schaltventil 14 ist ein elektro-magnetisch betätigbares Signalelement 17 angeordnet. Im angeregten Zustand (in Figur 1 dargestellt ist der nicht angeregte Zustand) stellt das Signalelement 17 über die Signalleitung 18 ein Signaldruck bereit, durch den sich das erste Schaltventil 14 von der hier dargestellten ersten Stellung in eine zweite Stellung schalten lässt. In dieser zweiten Stellung verbindet das erste Schaltventil 14 die Druckleitung 4 mit dem Gruppenauswahlventil 11, wodurch die zweite Kammer 3 des Aktuators A3 bei den hier darstellten Stellungen der Ventile 11 und 13 unter Druck gesetzt würde.

Wie auch dem ersten Schaltventil 14 ist dem zweiten Schaltventil 15 ein elektro-magnetisch betätigbares Signalelement 19 zugeordnet, das über eine Signalleitung 20 mit dem zweiten Schaltventil 15 verbunden ist. Im angeregten Zustand öffnet das Signalelement 19 und leitet Druck aus der Druckleitung 4 auf das Schaltventil 15, das von einer ersten Stellung (erste Stellung in Figur 1 dargestellt) in eine zweite Stellung schaltet, wobei die Möglichkeit dieses Schaltens von der Stellung des ersten Schaltventils 14 abhängt.

In ähnlicher Weise sind auch den Kammerauswahlventilen 12, 13 und dem Gruppenauswahlventil 11 jeweils ein Signalelement zur Erzeugung eines Signaldrucks zugeordnet. Dem Kammerauswahlventil 12 ist ein Signalelement 21 und dem Gruppenauswahlventil 11 ein Signalelement 22 vorgeschaltet. Die Signalelemente 17, 19, 21 und 22 sind jeweils als elektro-magnetisch betätigbare 3/2-Schaltventile ausgebildet.

Der Signaldruck in der Signalleitung 18 erzeugt eine erste Schaltkraft, die in dem gezeigten Ausführungsbeispiel doppelt so groß sein soll wie eine zweite Schaltkraft, die von dem Signaldruck aus der Signalleitung 20 herrührt. Das Verhältnis der Schaltkräfte zueinander lässt sich dabei über unterschiedlich große Flächen der Schaltventile 14, 15 einstellen, auf die Signaldrücke jeweils wirken.

In der jeweils ersten Stellung der beiden Schaltventile 14, 15 wird, wie oben bereits erwähnt, das Schaltsystem 1 mit den Aktuatoren A1 bis A4 drucklos gestellt. Dadurch lassen sich Leckageverluste minimieren. Wird nun das Signalelement 17 angesteuert, wird das erste Schaltventil 14 in dessen zweite Stellung gedrückt, wobei gleichzeitig die Feder 16 zusammengedrückt wird. Aufgrund der Reihenschaltung von erstem Schaltventil 14 und Feder 16 wird die Feder 16 mit der ersten Schaltkraft zusammengedrückt, wenn man von Reibkräften absieht, die auf das erste Schaltventil 14 wirken. Somit drückt die Feder 16 mit dieser ersten Schaltkraft gegen das zweite Schaltventil 15 und hält es in dessen ersten Stellung. Da die zweite Schaltkraft halb so groß ist wie die von der Feder übertragene erste Schaltkraft, verbleibt das zweite Schaltventil in dessen ersten Stellung, auch wenn das zugehörige Signalelement 19 öffnet. Erst wenn das Signalelement 17 schließt und der Steuerdruck in der Signalleitung 18 und damit die erste Schaltkraft entsprechend abgebaut werden, kann das zweite Schaltventil 15 durch die zweite Schaltkraft in dessen zweite Stellung geschoben werden.

Befindet sich hingegen das zweite Schaltventil in dessen zweiten Stellung und wird nun das erste Schaltventil mit der ersten Schaltkraft beaufschlagt, wird das erste Schaltventil in dessen zweite Stellung geschoben, unabhängig davon, ob der Bewegung die zweite Schaltkraft entgegensteht, da die erste Schaltkraft größer ist als die zweite Schaltkraft.

Eine gleichzeitige Anregung der beiden Signalelemente 17, 18 führt somit immer zu einer eindeutigen Stellung der Schaltventilanordnung. Aufgrund der gegebenen Priorität auf das erste Schaltventil 14 lässt sich im Fall einer gleichzeitigen Anregung der beiden Signalelemente 17, 18 je nach Stellung des Gruppenauswahlventils 11 entweder der Aktuator A1 oder der Aktuator A3 betätigen. Durch die Möglichkeit, den Aktuator A1 zu betätigen, lässt sich der Rückwärtsgang R und der erste Vorwärtsgang einlegen. Somit ließe sich ein mit dem Schaltsystem 1 ausgestattetes Kraftfahrzeug noch fortbewegen.

Aber auch wenn eines der Signalelemente 17, 19 sich nicht mehr öffnen lässt, ist ein (Not-)Betrieb des Kraftfahrzeugs möglich. Kann beispielsweise kein Signaldruck in der Signalleitung 18 aufgebaut werden, lässt sich das zweite Schaltventil 15 ohne Einschränkungen hin- und herschalten, wodurch wahlweise das Schaltsystem 1 drucklos gestellt oder einer der Aktuatoren A2 und A4 zur Druckbeaufschlagung ausgewählt werden kann.

### Bezugszeichenliste

- 1: Schaltsystem
- 2: Erste Kammer
- 3: Zweite Kammer
- 4: Druckleitung
- 5: Pumpe
- 6: Druckregler
- 7: Ölsumpfleitung
- 8: Doppelkolben
- 9: Schaltgabel
- 10: Schaltventilvorrichtung
- 11: Gruppenauswahlventil
- 12: Kammerauswahlventil
- 13: Kammerauswahlventil
- 14: Erstes Schaltventil
- 15: Zweites Schaltventil
- 16: Feder
- 17: Signalelement
- 18: Signalleitung
- 19: Signalelement
- 20: Signalleitung
- 21: Signalelement
- 22: Signalelement
- A1 bis A4: Aktuator
- G1 bis G6: Vorwärtsgang
- R: Rückwärtsgang

## Patentansprüche

1. Schaltgetriebe, insbesondere Doppelkupplungsgetriebe für ein Kraftfahrzeug, mit einem Schaltsystem (1), das einen ersten Aktuator und wenigstens einen zweiten Aktuator zum Ein- und Auslegen von Gängen sowie eine Schaltventilvorrichtung (10) aufweist, die ein erstes ansteuerbares Schaltventil (14) umfasst, durch das in einer ersten Stellung der erste Aktuator drucklos gestellt und in einer zweiten Stellung unter Druck gesetzt werden kann, wobei zum Schalten von der ersten in die zweite Stellung und zum Halten in der zweiten Stellung eine erste Schaltkraft bereitsteht, und die ein zweites ansteuerbares Schaltventil (15) umfasst, durch das in einer ersten Stellung der zweite Aktuator drucklos gestellt und in einer zweiten Stellung unter Druck gesetzt werden kann, wobei zum Schalten von der ersten in die zweite Stellung und zum Halten in der zweiten Stellung eine zweite Schaltkraft bereitsteht, **dadurch gekennzeichnet, dass** eine Koppelung (16) zwischen dem ersten Schaltventil (14) und dem zweiten Schaltventil (15) vorgesehen ist, die die erste Schaltkraft auf das zweite Schaltventil (15) wenigstens zum Teil überträgt, wobei die aus der ersten Schaltkraft und aus der zweiten Schaltkraft resultierende, auf das zweite Schaltventil (15) wirkende Kraft nicht ausreicht, das zweite Schaltventil (15) in dessen zweiten Stellung zu halten oder, wenn es sich in der ersten Stellung befindet, in dessen zweite Stellung zu drücken, wobei bei fehlerbedingtem gleichzeitigen Anliegen der ersten und zweiten Schaltkraft das erste Schaltventil sich in dessen zweiten Stellung befindet.

2. Schaltgetriebe nach Anspruch 1, **dadurch gekennzeichnet, dass** die jeweilige zweite Stellung des ersten und zweiten Schaltventils (14, 15) federbelastet ist.

3. Schaltgetriebe nach Anspruch 1 oder 2, **dadurch gekennzeichnet, dass** die erste Schaltkraft größer ist als die zweite Schaltkraft, vorzugsweise etwa doppelt so groß.

4. Schaltgetriebe nach einem der Ansprüche 1 bis 3, **dadurch gekennzeichnet, dass** die Koppelung (16) mechanisch ist.

5. Schaltgetriebe nach einem der Ansprüche 1 bis 4, **dadurch gekennzeichnet, dass** die Koppelung eine Feder (16) umfasst, wobei die Feder (16) in einer Ruhestellung die Schaltventile (14, 15) in deren jeweilige erste Stellung drückt.

6. Schaltgetriebe nach einem der Ansprüche 1 bis 5, **dadurch gekennzeichnet, dass** die Koppelung (16) zwischen dem ersten und zweiten Schaltventil (14, 15) eine gleichzeitige jeweils zweite Stellung der beiden Schaltventile durch Formschluss ausschließt.

7. Schaltgetriebe nach einem der Ansprüche 1 bis 6, **dadurch gekennzeichnet, dass** den Schaltventilen (14, 15) jeweils ein Signalelement (18, 20) zur Erzeugung eines Signaldrucks zum Aufbau einer Schaltkraft zugeordnet sind.

8. Schaltgetriebe nach Anspruch 7, **dadurch gekennzeichnet, dass** der Signaldruck des Signalelements (18) des ersten Schaltventils (14) dem Signaldruck des Signalelements (20) des zweiten Schaltventils (15) entspricht.

9. Schaltgetriebe nach Anspruch 7 oder 8, **dadurch gekennzeichnet, dass** eine wirksame Fläche eines mit dem Signaldruck beaufschlagten Kolbens des ersten Schaltventils (14) größer ist als eine wirksame Fläche eines mit dem Signaldruck beaufschlagten Kolbens des zweiten Schaltventils (15).

10. Schaltgetriebe nach Anspruch 9, **dadurch gekennzeichnet, dass** die wirksame Fläche des Kolbens des ersten Schaltventils (14) in etwa doppelt so groß ist wie die wirksame Fläche des Kolbens des zweiten Schaltventils (15).

11. Schaltgetriebe nach einem der Ansprüche 1 bis 10, **dadurch gekennzeichnet, dass** wenigstens eines der Schaltventile (14, 15) als 3/2-Schaltventil ausgebildet ist.

## Claims

1. Manual transmission, in particular dual clutch transmission for a motor vehicle, having a shifting system (1) which has a first actuator and at least a second actuator for engaging and releasing gears and also a switching-valve arrangement (10) which comprises a first activatable switching valve (14), by means of which, in a first position, the first actuator can be set to a pressureless state and, in a second position, the first actuator can be subjected to pressure, a first switching force being provided for switching the valve from the first position into the second position and for retaining it in the second position, and which also comprises a second activatable switching valve (15), by means of which, in a first position, the second actuator can be set to a pressureless state and, in a second position, the second actuator can be subjected to pressure, a second switching force being provided for switching the valve from the first position into the second position and for retaining it in the second position, **characterized in that** a coupling (16) is provided between the first switching valve (14) and the second switching valve (15) and transmits the first switching force to the second switching valve (15) at least in part, the force which results from the first switching force and the second switching force and acts on the second switching valve (15) being insufficient to retain the second switching valve (15) in its second position or, if it is located in the first position, to force it into its second position, it being the case that, when the first and second switching forces are active simultaneously, as a result of error, the first switching valve is located in its second position.

2. Manual transmission according to Claim 1, **characterized in that** the respective second position of the first and second switching valves (14, 15) is spring-loaded.

3. Manual transmission according to Claim 1 or 2, **characterized in that** the first switching force is greater than the second switching force, preferably approximately twice the magnitude.

4. Manual transmission according to one of Claims 1 to 3, **characterized in that** the coupling (16) is mechanical.

5. Manual transmission according to one of Claims 1 to 4, **characterized in that** the coupling comprises a spring (16), the spring (16), in a rest position, forcing the switching valves (14, 15) into their respective first position.

6. Manual transmission according to one of Claims 1 to 5, **characterized in that** the coupling (16) between the first and second switching valves (14, 15) rules out the situation where the two switching valves simultaneously assume a second position in each case by form fitting.

7. Manual transmission according to one of Claims 1 to 6, **characterized in that** the switching valves (14, 15) are each assigned a signal element (18, 20) for generating a signal pressure for building up a switching force.

8. Manual transmission according to Claim 7, **characterized in that** the signal pressure of the signal element (18) of the first switching valve (14) corresponds to the signal pressure of the signal element (20) of the second switching valve (15).

9. Manual transmission according to Claim 7 or 8, **characterized in that** an effective surface area of a piston of the first switching valve (14), this piston being subjected to the signal pressure, is greater than an effective surface area of a piston of the second switching valve (15), this piston being subjected to the signal pressure.

10. Manual transmission according to Claim 9, **characterized in that** the effective surface area of the piston of the first switching valve (14) is approximately double the size of the effective surface area of the piston of the second switching valve (15).

11. Manual transmission according to one of Claims 1 to 10, **characterized in that** at least one of the switching valves (14, 15) is designed as a 3/2-way switching valve.

## Revendications

1. Boîte de vitesses, en particulier boîte de vitesses à double embrayage pour un véhicule automobile, comprenant un système de changement de vitesse (1) qui présente un premier actionneur et au moins un deuxième actionneur pour engager et désengager des vitesses, ainsi qu'un dispositif de soupape de contrôle (10) qui comprend une première soupape de contrôle commandable (14) qui permet, dans une première position, de ne soumettre l'actionneur à aucune pression, et dans une deuxième position, de le soumettre à une pression, une première force de contrôle étant appliquée pour passer de la première à la deuxième position et pour rester dans la deuxième position, et le dispositif de soupape de contrôle comprenant une deuxième soupape de contrôle commandable (15) qui, permet, dans une première position, de ne soumettre le deuxième actionneur à aucune pression, et dans une deuxième position, de le soumettre à une pression, une deuxième force de contrôle étant appliquée pour passer de la première à la deuxième position et pour rester dans la deuxième position, **caractérisée en ce que** l'on prévoit un accouplement (16) entre la première soupape de contrôle (14) et la deuxième soupape de contrôle (15), qui transfère au moins en partie la première force de contrôle à la deuxième soupape de contrôle (15), la force agissant sur la deuxième soupape de contrôle (15), résultant de la première force de contrôle et de la deuxième force de contrôle, ne suffisant pas à maintenir la deuxième soupape de contrôle (15) dans sa deuxième position, ou, si elle se trouve dans sa première position, à la presser dans sa deuxième position, la première soupape de contrôle se trouvant dans sa deuxième position en cas d'application simultanée, causée par une défaillance, de la première et de la deuxième force de contrôle.

2. Boîte de vitesses selon la revendication 1, **caractérisée en ce que** la deuxième position respective de la première et de la deuxième soupape de contrôle (14, 15) est sollicitée par ressort.

3. Boîte de vitesses selon la revendication 1 ou 2, **caractérisée en ce que** la première force de contrôle est supérieure à la deuxième force de contrôle, de préférence est approximativement deux fois plus grande.

4. Boîte de vitesses selon l'une quelconque des revendications 1 à 3, **caractérisée en ce que** l'accouplement (16) est mécanique.

5. Boîte de vitesses selon l'une quelconque des revendications 1 à 4, **caractérisée en ce que** l'accouplement comprend un ressort (16), le ressort (16) pressant dans une position de repos les soupapes de contrôle (14, 15) dans leur première position respective.

6. Boîte de vitesses selon l'une quelconque des revendications 1 à 5, **caractérisée en ce que** l'accouplement (16) entre la première et la deuxième soupape de contrôle (14, 15) exclut une deuxième position respective simultanée des deux soupapes de contrôle par engagement positif.

7. Boîte de vitesses selon l'une quelconque des revendications 1 à 6, **caractérisée en ce que** l'on associe aux soupapes de contrôle (14, 15) à chaque fois un élément de signal respectif (18, 20) pour générer une pression de signalisation pour produire une force de contrôle.

8. Boîte de vitesses selon la revendication 7, **caractérisée en ce que** la pression de signalisation de l'élément de signal (18) de la première soupape de contrôle (14) correspond à la pression de signalisation de l'élément de signal (20) de la deuxième soupape de contrôle (15).

9. Boîte de vitesses selon la revendication 7 ou 8, **caractérisée en ce qu'**une surface active d'un piston de la première soupape de contrôle (14) sollicité par la pression de signalisation est supérieure à une surface active d'un piston de la deuxième soupape de contrôle (15) sollicité par la pression de signalisation.

10. Boîte de vitesses selon la revendication 9, **caractérisée en ce que** la surface active du piston de la première soupape de contrôle (14) est approximativement deux fois plus grande que la surface active du piston de la deuxième soupape de contrôle (15).

11. Boîte de vitesses selon l'une quelconque des revendications 1 à 10, **caractérisée en ce qu'**au moins l'une des soupapes de contrôle (14, 15) est réalisée sous forme de soupape de commutation à 3/2 voies.
